# EUROPÄISCHE PATENTSCHRIFT

(11) **EP 0 922 888 B1**
(45) Veröffentlichungstag und Bekanntmachung des Hinweises auf die Patenterteilung: **21.05.2003**
(21) Anmeldenummer: 98119582.9
(22) Anmeldetag: 16.10.1998
(51) Int. Cl.: F16J 15/12, F16J 15/06, F16J 15/10, F16B 43/00

(54) **Dichtungsring**
Sealing ring
Anneau d'étanchéité

(30) Priorität: 10.12.1997 DE 19754737
(43) Veröffentlichungstag der Anmeldung: 16.06.1999
(73) Patentinhaber: Festo AG & Co, 73734 Esslingen (DE)
(72) Erfinder: Stoll, Kurt Dr., 73732 Esslingen (DE); Kees, Ulrich, 66424 Homburg (DE)
(74) Vertreter: Abel, Martin, Dipl.-Ing.

(56) Entgegenhaltungen:
- EP-A- 0 177 709
- GB-A- 739 490

## Beschreibung

Die Erfindung betrifft einen Dichtungsring, der an seinen beiden einander entgegengesetzten Axialseiten jeweils einen ringförmigen Dichtabschnitt aufweist und der einen aus Kunststoffmaterial bestehenden, dem Dichtungsring eine Formstabilität verleihenden ringförmigen Grundkörper sowie einen in konzentrischer Anordnung an dem Grundkörper festgelegten, gummielastische Eigenschaften aufweisenden ringförmigen Dichtkörper umfaßt.

Ein Dichtungsring dieser Art geht beispielsweise aus der DE 39 18 891 C2 hervor. Dieser bekannte Dichtungsring verfügt über einen L-förmigen, aus Metall oder hartem Kunststoffmaterial bestehenden Grundkörper, an dem ein aus Gummi bestehender ringförmiger Dichtkörper festgelegt ist. Der Dichtungsring wird axial zwischen zwei relativ zueinander abzudichtenden Dichtflächen zweier Bauteile plaziert, wobei der Dichtkörper im montierten Zustand von axial entgegengesetzten Seiten her von den Dichtflächen beaufschlagt wird. Die beiden die Dichtwirkung hervorrufenden Dichtabschnitte des Dichtungsringes sind an dem Dichtkörper vorgesehen, während der Grundkörper eine rein abstützende Wirkung hat und ein Zerquetschen des Dichtkörpers verhindert.

Der bekannte Dichtungsring verfügt zwar über ausgezeichnete Gebrauchseigenschaften, ist jedoch relativ teuer in der Herstellung. Zudem muß eine beträchtliche Anpreßkraft ausgeübt werden, um den Dichtkörper so weit zu verformen, daß er mit beiden Dichtabschnitten an den zugeordneten Dichtflächen anliegt.

Es ist die Aufgabe der vorliegenden Erfindung, einen Dichtungsring zu schaffen, der unter Gewährleistung einer sicheren Abdichtfunktion einfacher und kostengünstiger herstellbar ist.

Zur Lösung dieser Aufgabe ist vorgesehen, daß der Grundkörper aus thermoplastischem Kunststoffmaterial besteht und mit seiner einen Axialseite unmittelbar selbst den ersten Dichtabschnitt bildet, und daß der den zweiten Dichtabschnitt bildende Dichtkörper aus elastomerem Kunststoffmaterial besteht und an der dem ersten Dichtabschnitt entgegengesetzten Axialseite unter Bildung eines Zweistoff-Spritzgußteils an den Grundkörper fest angeformt ist.

Auf diese Weise liegt ein vollständig aus Kunststoffmaterial bestehender Dichtungsring vor, der sehr einfach und preisgünstig als Zweistoff-Spritzgußteil hergestellt werden kann. Als Material für den Grundkörper ist thermoplastischer Kunststoff vorgesehen, der über ausreichende Stabilität und Steifigkeit verfügt, um dem Dichtungsring die gewünschte Formstabilität zu verleihen. Als Dichtkörper kommt Elastomermaterial zum Einsatz, das durch Spritzgießen einstückig fest an den Grundkörper angeformt ist. Die Anordnung ist so getroffen, daß der Grundkörper nicht nur als Träger für den Dichtkörper fungiert, sondern gleichfalls einen Dichtkörper darstellt, an dem einer der beiden ringförmigen Dichtabschnitte ausgebildet ist. Zwar hat der Grundkörper nicht das gleiche Verformungsvermögen wie der Dichtkörper, doch reicht die Nachgiebigkeit aus, um bezüglich Dichtflächen mit hoher Oberflächengüte sicher abzudichten. Der Elastomerkörper hingegen eignet sich auch zur Abdichtung gegenüber Dichtflächen mit hoher Rauhigkeit, so daß sich der Dichtungsring vor allem zur Erstausrüstung von Einrichtungen eignet, die aus Bauteilen eigener Herstellung und Zukaufteilen zusammengesetzt sind, wobei hinsichtlich der Teile eigener Herstellung sehr einfach eine hohe Oberflächengüte gewährleistet werden kann, bei den Zukaufteilen jedoch mit Rauhigkeitsschwankungen gerechnet werden muß.

Sollte nach längerer Einsatzdauer die die Dichtabschnitte beaufschlagende Anpreßkraft durch ein Kriechen des thermoplastischen Werkstoffes nachlassen, wird dies durch das elastische Verformungsvermögen des Elastomerkörpers kompensiert. Somit sind Leckagen auch noch nach langer Einsatzdauer nicht zu befürchten.

Vorteilhafte Weiterbildungen der Erfindung gehen aus den Unteransprüchen hervor.

Zur Optimierung der Abdichteigenschaften des thermoplastischen Grundkörpers kann der an diesem vorgesehene erste Dichtabschnitt mit wenigstens einem ringförmigen Axialvorsprung ausgestattet sein, der insbesondere eine umlaufende Dichtkante aufweist, so daß eine linienförmige Anlage an der Dichtfläche des zugeordneten Bauteils erreicht werden kann, woraus auf Grund der höheren Flächenpressung eine noch bessere Abdichtung resultiert.

Bei Bedarf können ohne weiteres mehrere, konzentrisch zueinander angeordnete Axialvorsprünge vorha-nden sein, die im Zusammenwirken mit der zugeordneten Dichtfläche auch einen labyrinthartigen Abdichteffekt herbeiführen können.

Im Bereich des Innenumfanges des Dichtungsringes befinden sich zweckmäßigerweise mehrere, über den Umfang verteilt angeordnete Haltevorsprünge, die eine verliersichere Fixierung des Dichtungsringes gewährleisten, wenn dieser beispielsweise auf ein Außengewinde eines Schraubteils aufgesteckt ist. Die Haltevorsprünge können dabei auch eine zentrierende Wirkung haben und Querverlagerungen bezüglich des zugeordneten Bauteils verhindern, so daß die Dichtabschnitte stets in korrekter Zuordnung zu den gegenüberliegenden Dichtflächen ausgerichtet sind.

Bei den Haltevorsprüngen handelt es sich vorzugsweise um einstückig mit dem Dichtungskörper ausgebildete Elastomerteile, die zweckmäßigerweise an der radial 1 nach innen weisenden Innenumfangsfläche des Grundkörpers durch Spritzgießen angeformt sind.

Der Dichtungsring eignet sich insbesondere zur Abdichtung zwischen zwei axial einander zugewandten Dichtflächen, die an zwei miteinander zu verbindenden fluidtechnischen Bauteilen vorgesehen sind. Eines der Bauteile kann hierbei ein Schraubteil sein, beispielsweise ein Stopfen oder eine Verschraubung, das über ein stutzenartiges, mit einem Außengewinde versehenes Gewindeteil verfügt, welches in ein Innengewinde eines anderen Bauteils, beispielsweise eines Ventils oder eines Arbeitszylinders, einschraubbar ist. Der Dichtungsring wird hierbei koaxial auf das Gewindeteil aufgesteckt, wobei die gegebenenfalls vorhandenen Haltevorsprünge eine Fixierung an dem Gewindeteil gewährleisten.

Der Dichtungsring kann so eingesetzt werden, daß das mit dem Dichtkörper zusammenwirkende Bauteil normalerweise keine Berührung mit dem Grundkörper eingeht. Allerdings kann auch vorgesehen sein, daß der Grundkörper an der den Dichtkörper tragenden Axialseite über wenigstens eine Abstützfläche verfügt, an der das zugeordnete Bauteil zur Anlage gelangen kann, wenn der elastomere Dichtkörper verformt worden ist.

Nachfolgend wird die Erfindung anhand der beiliegenden Zeichnung näher erläutert. In dieser zeigen:
- Fig. 1: eine bevorzugte Bauform des erfindungsgemäßen Dichtungsringes in einem Schnitt mit einer axial und radial verlaufenden Schnittebene gemäß Schnittlinie I-I aus Fig. 2, wobei zwei fluid-dicht zu verbindende Bauteile strichpunktiert schematisch angedeutet sind,
- Fig. 2: den Dichtungsring aus Fig. 1 in Draufsicht auf die den Dichtkörper aufweisende Axialseite mit Blick gemäß Pfeil II aus Fig. 1,
- Fig. 3: den in Fig. 1 markierten Ausschnitt III in vergrößerter Darstellung und
- Fig. 4: den in Fig. 1 markierten Ausschnitt IV in vergrößerter Darstellung.

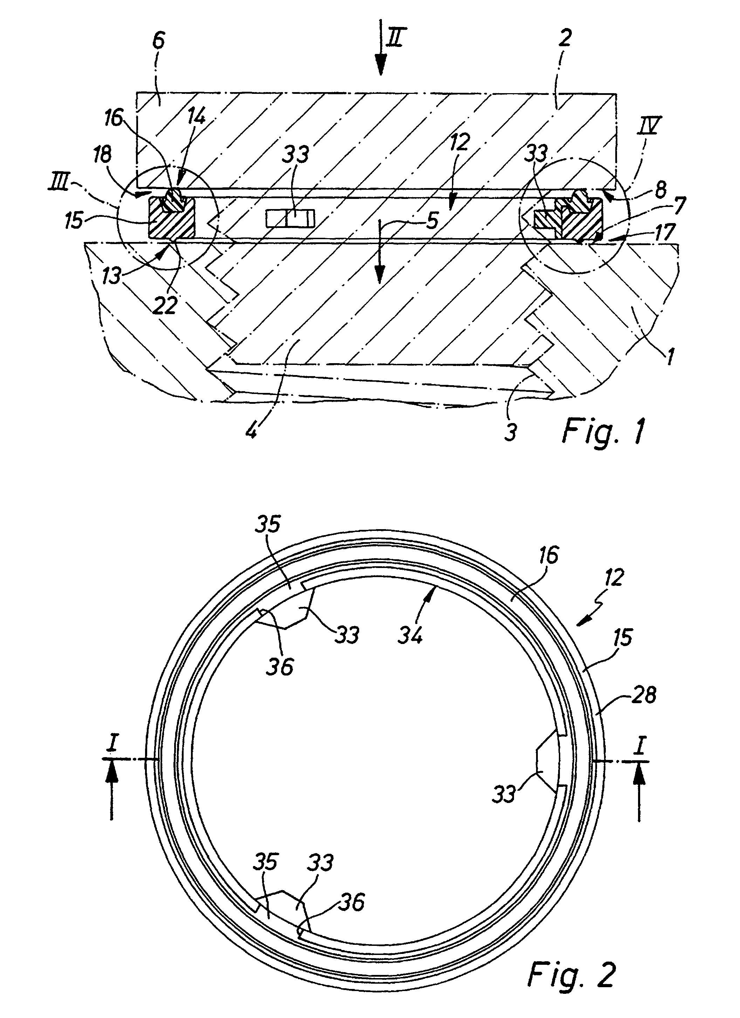

Fig. 1 zeigt strichpunktiert schematisch zwei fluiddicht miteinander zu verbindende Bauteile 1, 2 in schematischer Schnittdarstellung. Das erste Bauteil 1 verfügt über eine bohrungsartige Ausnehmung 3, die mit einem Innengewinde versehen ist. Das zweite Bauteil 2 verfügt über ein beispielsweise schaft- oder stutzenartiges Gewindeteil 4, das mit einem zum Innengewinde der Ausnehmung 3 passenden Außengewinde versehen ist. Das Gewindeteil 4 läßt sich somit in die Ausnehmung 3 axial gemäß Pfeilrichtung 5 einschrauben.

Am einen axialen Ende des Gewindeteils 4 verfügt das zweite Bauteil 2 über einen das Gewindeteil 4 radial überragenden Ringvorsprung 6, der beispielsweise von einem Betätigungsabschnitt des zweiten Bauteils 2 gebildet sein kann, der das Ansetzen eines Schraubwerkzeuges ermöglicht.

Bei in die Ausnehmung 3 eingeschraubtem Gewindeteil 4 liegen sich zwei an den beiden Bauteilen 1, 2 vorgesehene ringförmige Dichtflächen 7, 8 axial gegenüber. Die erste ringförmige Dichtfläche 7 befindet sich an dem ersten Bauteil 1 im Umfangsbereich der Mündung der Ausnehmung 3. Die gegenüberliegende zweite ringförmige Dichtfläche 8 befindet sich radial außerhalb des Gewindeteils 4 an der dem ersten Bauteil 1 axial zugewandten Seite des Ringvorsprunges 6.

Das zweite Bauteil 2 des Ausführungsbeispiels ist von einem Stopfen gebildet, der in die Ausnehmung 3 eingeschraubt wird, um diese fluiddicht zu verschließen. Bei dem ersten Bauteil 1 kann es sich dabei um ein Bauteil handeln, das ein Fluid enthält, beispielsweise Druckluft oder Öl. Durch den eingeschraubten Stopfen wird ein Fluidaustritt verhindert.

In einer anderen Ausführungsform kann das Bauteil 2 ein Anschlußteil 1 sein, das über einen durchgehenden Kanal verfügt und mit einer weiterführenden starren oder flexiblen Fluidleitung verbunden oder verbindbar ist. Im eingeschraubten Zustand wird dabei eine fluidische Verbindung zwischen der Ausnehmung 3 und, durch das zweite Bauteil 2 hindurch, der zugeordneten Fluidleitung hergestellt. Letzteres ist ein typischer Anwendungsfall auf dem Sektor der Pneumatik oder Hydraulik, wobei es sich bei dem ersten Bauteil 1 beispielsweise um ein Ventil oder einen durch Fluidkraft zu betätigenden Antrieb handeln kann.

Zur Abdichtung zwischen den beiden Bauteilen 1, 2 ist der in der Zeichnung in einer bevorzugten Gestaltung dargestellte erfindungsgemäße Dichtungsring 12 vorgesehen. Er kommt im montierten Zustand, der in Fig. 1, 3 und 4 ersichtlich ist, koaxial zwischen den beiden einander zugewandten ringförmigen Dichtflächen 7, 8 zu liegen, wobei das Gewindeteil 4 durch den Dichtungsring 12 hindurchgesteckt ist. An jeder seiner beiden in einander entgegengesetzte Axialrichtungen weisenden Axialseiten verfügt der Dichtungsring 12 über einen ringförmigen Dichtabschnitt 13,14 wobei der erste Dichtabschnitt 13 der ersten Dichtfläche 7 und der zweite Dichtabschnitt 14 der zweiten Dichtfläche 8 zugewandt ist. Das zweite Bauteil 2 wird mit einem ausreichenden Drehmoment in die Ausnehmung 3 eingeschraubt, so daß die vorerwähnten Dichtabschnitte 13, 14 von den ringförmigen Dichtflächen 7, 8 mit einer axial gerichteten Anpreßkraft beaufschlagt werden. Diese Anpreßkraft bewirkt einen Dichteffekt, der einen Fluidaustritt zwischen den beiden Bauteilen 1, 2 hindurch verhindert.

Der Dichtungsring 12 setzt sich aus zwei einstückig im Rahmen eines Spritzgießverfahrens zu einer integralen Baueinheit aneinander angeformten Körpern zusammen, bei denen es sich um einen Grundkörper 15 und einen Dichtkörper 16 von jeweils ringförmiger Gestalt handelt, die konzentrisch zueinander angeordnet sind.

Der Grundkörper 15, der beim Ausführungsbeispiel einen rechteckähnlichen Querschnitt hat, besteht aus thermoplastischem Kunststoffmaterial und ist als Spritzgußteil gefertigt. Es handelt sich dabei um ein verhältnismäßig steifes Material, so daß der Dichtkörper 16 dem Dichtungsring 12 eine gute Formstabilität verleiht, die einem starren Körper ähnlich ist. Im Gegensatz zu biegeschlaffen Bauteilen läßt sich der Dichtungsring 12 daher sehr gut auch in automatischen Montagemaschinen handhaben.

Der Dichtkörper 16 ist erheblich flexibler als der Grundkörper 15 und verfügt über gummielastische Eigenschaften, wobei er aus elastomerem Kunststoffmaterial besteht. Er ist wie der Grundkörper 15 durch Spritzgießen erzeugt. Der Dichtungsring stellt somit ein Zweistoff-Spritzgußteil dar, bei dem die beiden Körper 15, 16 durch Spritzgießen fest aneinander angeformt sind.

Typischerweise erfolgt die Herstellung dergestalt, daß zunächst einer der Körper gespritzt wird, wonach der andere Körper durch Aufbringen des Kunststoffmaterials angespritzt wird. Der andere Körper wird also erst beim Anspritzen geformt, so daß sich die beiden Werkstoffe innig stoffschlüssig miteinander verbinden können. Auf Bindemittel kann dabei verzichtet werden. Zweckmäßigerweise wird zunächst der formstabile Grundkörper 15 hergestellt, an den anschließend Elastomermaterial zur Bildung des Dichtkörpers 16 angespritzt wird. Mit einem derartigen Verfahren lassen sich sehr hohe Taktraten realisieren, wobei die zwischenzeitlichen Abkühlphasen minimal sind, so daß hohe Stückzahlen pro Zeiteinheit hergestellt werden können.

Bei dem Dichtungsring 12 hat nicht nur der Dichtkörper, sondern auch der Grundkörper 15 eine Abdichtaufgabe. So ist vorgesehen, daß die eine, beim Ausführungsbeispiel der ersten Dichtfläche 7 zugewandte Axialseite des Grundkörpers 15 den ersten Dichtabschnitt 13 bildet. Der Dichtkörper 16 ist an der dem ersten Dichtabschnitt 13 entgegengesetzten Axialseite an den Grundkörper 15 angeformt und bildet den zweiten Dichtabschnitt 14.

Trotz der vorhandenen Steifigkeit des Grundkörpers 15 werden auf Grund der thermoplastischen Materialwahl und der vorhandenen Nachgiebigkeit Abdichteigenschaften erzielt, die in Verbindung mit einer eine geringe Rauhigkeit aufweisenden Dichtfläche 7 eine zuverlässige Dichtheit gewährleisten. Es kann daher an der entsprechenden Axialseite des Dichtungsringes 12 auf ein weiteres Elastomerteil verzichtet werden, was die Herstellung preisgünstiger gestaltet.

Sollte sich im Laufe der Zeit durch Kriechen eine Materialverformung im Grundkörper 15 einstellen, führt dies nicht zu einem Nachlassen der Dichtqualität, da der Dichtkörper 16 auf Grund seines gummielastischen Verformungsvermögens zu einer selbsttätigen Kompensation der Materialverformungen fähig ist.

Um in dem ersten Dichtbereich 17 zwischen dem Grundkörper 15 und dem ersten Bauteil 1 in gewissen Fällen eine Verbesserung des Dichteffektes herbeizuführen, kann der Grundkörper 15 an seinem ersten Dichtabschnitt 13 wie abgebildet über einen ringförmigen, konzentrisch angeordneten Axialvorsprung 22 verfügen. Dieser ist zweckmäßigerweise so ausgeführt, daß er sich axial vom Grundkörper 15 weg verjüngt und eine ringförmige Dichtkante 23 vorliegt, die einen linienförmigen Kontakt mit der zugewandten ersten Dichtfläche 7 hervorruft.

Beim Ausführungsbeispiel ist ein einziger Axialvorsprung 22 vorhanden, der sich an der betreffenden Axialseite radial mittig am Grundkörper 15 befindet, so daß eine gleichmäßige Krafteinleitung auftritt.

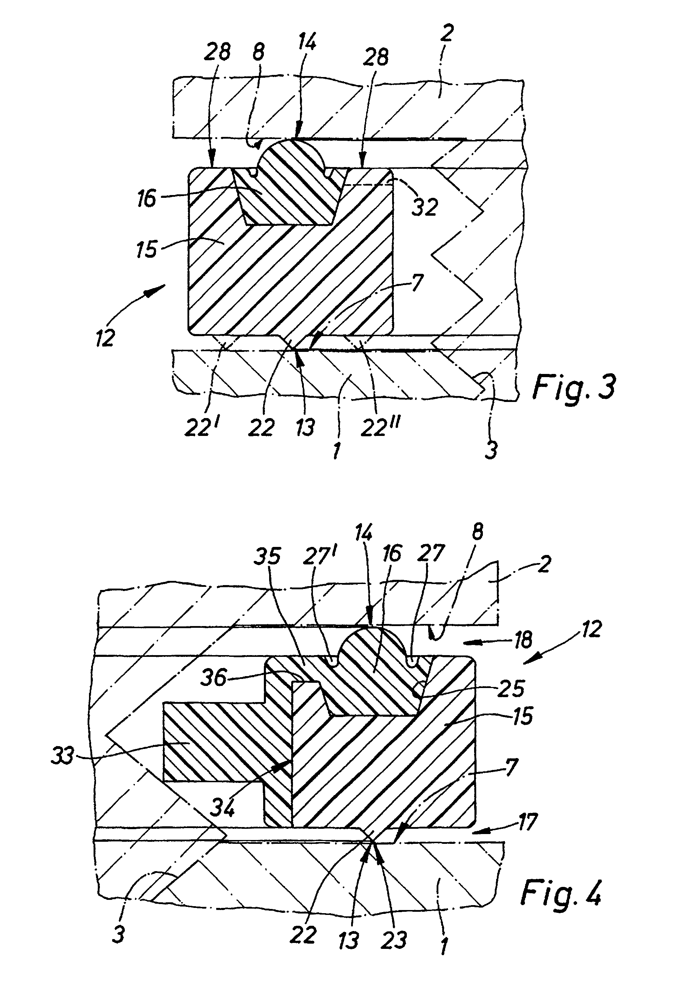

Es wäre durchaus möglich, mehrere, insbesondere konzentrisch zueinander angeordnete Axialvorsprünge 22 vorzusehen, wie dies in Fig. 3 anhand zweier zusätzlicher Axialvorsprünge 22', 22'' strichpunktiert illustriert ist. Durch eine Mehrzahl derartiger Axialvorsprünge wird auch ein Dichteffekt vergleichbar einer Labyrinthdichtung erzielt, und zwar auch dann, wenn die Axialvorsprünge 22 keine scharfe Dichtkante aufweisen.

Der Dichtkörper 16 verfügt beim Ausführungsbeispiel über einen ringförmigen Dichtwulst 24, der den Grundkörper 15 axial zur zweiten Dichtfläche 8 hin überragt und für die Abdichtung im zweiten Dichtbereich 18 zwischen dem Dichtungsring 12 und dem zweiten Bauteil 2 zuständig ist. Werden die beiden Bauteile 1, 2 axial zueinander bewegt, wird der Dichtwulst 24 gepreßt und verformt, wobei er sich an die zweite Dichtfläche 8 anschmiegt und infolge seiner Weichelastizität in der Lage ist, auch gröbere Oberflächenunregelmäßigkeiten auszugleichen und für einen sicheren Dichtkontakt zu sorgen.

Der Dichtkörper 16 ist zweckmäßigerweise in einer Ringnut 25 fixiert, die an der dem ersten Dichtabschnitt 13 entgegengesetzten Axialseite in den Grundkörper 15 eingelassen ist. Der Dichtkörper 16 sitzt mit einem ringförmigen Befestigungsabschnitt 26 in der Ringnut 25 ein und ragt mit dem einstückig angeformten Dichtwulst 24 axial über den Grundkörper 15 vor.

Zweckmäßigerweise ist die radial gemessene Breite des ringförmigen Befestigungsabschnittes 26 größer als diejenige des Dichtwulstes 24. Zweckmäßig ist es dabei, wenn radial außen und radial innen im jeweiligen Übergangsbereich zwischen dem Dichtwulst 24 und dem Befestigungsabschnitt 26 eine konzentrisch angeordnete ringförmige, nutartige Vertiefung 27, 27' vorgesehen ist, die beim axialen Pressen des Dichtungsringes 12 verdrängtes Material des Dichtwulstes 24 aufnehmen kann.

Der Dichtungsring 12 kann so ausgelegt sein, daß die beiden Bauteile 1, 2 "auf Festanschlag" relativ zueinander festgezogen werden können. In diesem Falle wird der Dichtkörper 16 so weit verformt, bis das zweite Bauteil 2 mit seiner zweiten ringförmigen Dichtfläche 8 den Dichtwulst 24 so weit verformt hat, bis sie an einer gegenüberliegenden Abstützfläche 28 des Grundkörpers 15 zur Anlage gelangt. Diese Abstützfläche 28 ist axial ausgerichtet und befindet sich an der den Dichtkörper 16 tragenden Axialseite des Grundkörpers 15 radial außerhalb und innerhalb des Dichtkörpers 16.

Denkbar wäre es, nur auf einer Radialseite des Dichtkörpers 16 eine Abstützfläche vorzusehen. So könnte der Grundkörper 15, wie in Fig. 3 strichpunktiert angedeutet, radial innerhalb des Dichtkörpers 16 über eine konzentrisch umlaufende, ringförmige Aussparung 32 verfügen. Diese kann bei Bedarf einen Aufnahmeraum definieren, der verformtes Material des inkompressiblen Dichtkörpers aufnehmen kann. Auf diese Weise kann das Elastomermaterial beim Verspannen der Dichtflächen 7, 8 seitlich ausweichen und wird nicht zerstört.

In vorteilhafter Ausgestaltung verfügt der Dichtungsring 12 im Bereich seines Innenumfanges über mehrere, über den Umfang verteilt angeordnete Haltevorsprünge 33, die dazu dienen, den Dichtungsring 12 im auf das Gewindeteil 4 aufgesteckten Zustand verliersicher zu halten. Zusätzlich oder alternativ dienen die Haltevorsprünge 33 auch dazu, die Aufrechterhaltung einer gewünschten konzentrischen Relativlage zwischen dem Dichtungsring 12 einerseits und den Dichtflächen 7, 8 andererseits zu gewährleisten. Diesen Effekt könnte man als Zentrierung bezeichnen.

Die Haltevorsprünge 33 greifen beim Ausführungsbeispiel in die Vertiefungen des Außengewindes des Gewindeteils 4 ein. Da sie aus gummielastischem Material bestehen, behindern sie die Montage des Dichtungsringes 12 auf dem Gewindeteil 4 nicht, der Dichtungsring 12 kann unter elastischer Verformung der Haltevorsprünge 33 koaxial problemlos aufgesteckt werden.

Die Haltevorsprünge 33 ragen bezüglich des Grundkörpers 15 radial nach innen, stehen also nach innen hin über den Grundkörper 15 vor. Ihre in Umfangsrichtung weisenden Seitenflächen können abgeschrägt werden, so daß sie sich radial zum Zentrum des Dichtungsringes 12 hin verjüngen. Ihre Verteilung entlang des Umfanges des Dichtungsringes 12 ist zweckmäßigerweise regelmäßig, wobei im Falle des Ausführungsbeispiels drei Haltevorsprünge 33 vorhanden sind.

Die Haltevorsprünge 33 sind zweckmäßigerweise einstückig mit dem Dichtkörper 16 ausgebildet und können daher bei der Spritzgießformung des Dichtkörpers 16 mitangespritzt werden. Zweckmäßigerweise sind sie derart plaziert, daß sie an der radial nach innen weisenden Innenumfangsfläche 34 des Grundkörpers 15 anliegen und dort insbesondere durch den Spritzgießvorgang fest angeformt sind.

Beim Ausführungsbeispiel steht jeder Haltevorsprung 33 mit wenigstens einem Verbindungssteg 35 in einstückiger Verbindung mit dem Dichtkörper 16. Diese Verbindungsstege 35 verlaufen zweckmäßigerweise versenkt im Grundkörper 15. Letzterer verfügt an der den Dichtkörper 16 aufweisenden Axialseite über sich zwischen der Ringnut 25 und der Innenumfangsfläche 34 erstreckende, nutähnliche Ausnehmungen 36, die die Verbindungsstege 35 beim Ausführungsbeispiel vollständig aufnehmen. Die axial gerichtete Außenfläche der Verbindungsstege 35 verläuft beim Ausführungsbeispiel zumindest annähernd in der gleichen, rechtwinkelig zur Längsachse des Dichtungsringes 12 verlaufenden Ebene wie die Abstützfläche 28.

## Patentansprüche

1. Dichtungsring, der an seinen beiden einander entgegengesetzten Axialseiten jeweils einen ringförmigen Dichtabschnitt (13, 14) aufweist und der einen aus Kunststoffmaterial bestehenden, dem Dichtungsring (12) eine Formstabilität verleihenden ringförmigen Grundkörper (15) sowie einen in konzentrischer Anordnung an dem Grundkörper (15) festgelegten, gummielastische Eigenschaften aufweisenden ringförmigen Dichtkörper (16) umfaßt, **dadurch gekennzeichnet, daß** der Grundkörper (15) aus thermoplastischem Kunststoffmaterial besteht und mit seiner einen Axialseite unmittelbar selbst den ersten Dichtabschnitt (13) bildet, und daß der den zweiten Dichtabschnitt (14) bildende Dichtkörper (16) aus elastomerem Kunststoffmaterial besteht und an der dem ersten Dichtabschnitt (13) entgegengesetzten Axialseite unter Bildung eines Zweistoff-Spritzgußteils an den Grundkörper (15) fest angeformt ist.

2. Dichtungsring nach Anspruch 1, **dadurch gekennzeichnet, daß** der Grundkörper (15) am ersten Dichtabschnitt (13) wenigstens einen ringförmigen, konzentrisch zum Grundkörper (15) angeordneten Axialvorsprung (22) aufweist.

3. Dichtungsring nach Anspruch 2, **dadurch gekennzeichnet, daß** der mindestens eine Axialvorsprung (22) eine axial vom Grundkörper (15) wegweisende Dichtkante (23) aufweist.

4. Dichtungsring nach Anspruch 2 oder 3, **dadurch gekennzeichnet, daß** der erste Dichtabschnitt (13) über mehrere, konzentrisch zueinander angeordnete Axialvorsprünge (22, 22', 22'') verfügt.

5. Dichtungsring nach einem der Ansprüche 1 bis 4, **dadurch gekennzeichnet, daß** im Bereich seines Innenumfanges mehrere, über den Umfang verteilt angeordnete Haltevorsprünge (33) vorgesehen sind, die einstückig mit dem Dichtkörper (16) ausgebildet sind und bezüglich des Grundkörpers (15) nach radial innen ragen.

6. Dichtungsring nach Anspruch 5, **gekennzeichnet durch** drei mit gleichmäßigem Abstand zueinander angeordnete Haltevorsprünge (33).

7. Dichtungsring nach Anspruch 5 oder 6, **dadurch gekennzeichnet, daß** die Haltevorsprünge (33) an der radial nach innen weisenden Innenumfangsfläche (34) des Grundkörpers (15) angeformt sind und über Verbindungsstege (35) mit dem Dichtkörper (16) verbunden sind.

8. Dichtungsring nach einem der Ansprüche 1 bis 7, **dadurch gekennzeichnet, daß** der Dichtkörper (16) mit einem ringförmigen Befestigungsabschnitt (26) in einer an der zugeordneten Axialseite des Grundkörpers (15) eingelassenen Ringnut (25) gehalten ist und mit mindestens einem ringförmigen Dichtwulst (24) axial über den Grundkörper (15) vorsteht.

9. Dichtungsring nach Anspruch 8, **dadurch gekennzeichnet, daß** radial außen und/oder innen im übergangsbereich zwischen dem Dichtwulst (24) und dem bezüglich diesem breiteren Befestigungsabschnitt (26) eine nutartige Vertiefung (27, 27') vorgesehen ist.

10. Dichtungsring nach Anspruch 8 oder 9 in Verbindung mit Anspruch 7, **dadurch gekennzeichnet, daß** der Grundkörper (15) an der den Dichtkörper (16) aufweisenden Axialseite über sich zwischen der Ringnut (25) und der Innenumfangsfläche (34) erstreckende Ausnehmungen (36) verfügt, in denen die Verbindungsstege (35) zumindest teilweise aufgenommen sind.

11. Dichtungsring nach einem der Ansprüche 1 bis 10, **dadurch gekennzeichnet, daß** der Dichtkörper (16) und der Grundkörper (15) bindemittellos aneinander angespritzt sind.

12. Dichtungsring nach einem der Ansprüche 1 bis 11, **gekennzeichnet durch** wenigstens eine radial außerhalb und/ oder radial innerhalb des Dichtkörpers (16) an dem Grundkörper (15) vorgesehene, insbesondere zur Aufnahme von verdrängtem Dichtkörpermaterial dienende, ringförmige Aussparung (32).

13. Dichtungsring nach einem der Ansprüche 1 bis 12, **dadurch gekennzeichnet, daß** der Grundkörper (15) an der den Dichtkörper (16) tragenden Axialseite über wenigstens eine radial außerhalb und/oder innerhalb des Dichtkörpers (16) angeordnete, axial ausgerichtete Abstützfläche (28) verfügt.

## Claims

1. Seal ring having on each of its two opposing axial sides an annular seal section (13, 14) comprising an annular base body (15) made of plastic material and giving the seal ring (12) dimensional stability, together with an annular sealing body (16) with rubber-elastic properties, fixed concentrically to the base body (15), **characterised in that** the base body (15) is made of thermoplastic material and itself forms directly with one of the axial sides the first seal section (13), and that the sealing body (16) forming the second seal section (14) is made of elastomer plastic material and is firmly moulded on to the base body (15) on the axial side opposite the first seal section (13) to form a dual material injection-moulded part.

2. Seal ring according to claim 1, **characterised in that** the base body (15) has on the first seal section (13) one or more annular axial projections (22), arranged concentrically to the base body (15).

3. Seal ring according to claim 2, **characterised in that** the axial projection or projections (22) has or have a sealing edge (23) facing axially away from the base body (15).

4. Seal ring according to claim 2 or 3, **characterised in that** the first seal section (13) has several axial projections (22, 22', 22") arranged concentrically relative to one another.

5. Seal ring according to any of claims 1 to 4, **characterised in that** it is provided in the area of its inner periphery with several retaining projections (33) distributed over the periphery, which form an integral part of the sealing body (16) and extend radially inwards relative to the base body (15).

6. Seal ring according to claim 5, **characterised by** three retaining projections (33) spaced at an equal distance apart from one another.

7. Seal ring according to claim 5 or 6, **characterised in that** the retaining projections (33) are moulded on to the radially inwards facing inner peripheral face (34) of the base body (15) and are connected to the sealing body (16) by connecting webs (35).

8. Seal ring according to any of claims 1 to 7, **characterised in that** the sealing body (16) is held by an annular fastening section (26) in an annular groove (25) made in the assigned axial side of the base body (15) and has one or more annular sealing flanges (24) which extend axially beyond the base body (15).

9. Seal ring according to claim 8, **characterised in that** a channel-like recess (27, 27') is provided radially outwards and/or inwards in the transition zone between the sealing flange (24) and the fastening section (26) which is wider than the former.

10. Seal ring according to claim 8 or 9 in combination with claim 7, **characterised in that** the base body (15) has, on the axial side facing the sealing body (16), recesses (36) extending between the annular groove (25) and the inner peripheral face (34), in which the connecting webs (35) are at least partially accommodated.

11. Seal ring according to any of claims 1 to 10, **characterised in that** the sealing body (16) and the base body (15) are moulded on to one another without binder.

12. Seal ring according to any of claims 1 to 11, **characterised by** one or more annular recesses (32) provided on the base body (15) radially outside and/or radially inside the sealing body (16), in particular to accommodate displaced sealing body material.

13. Seal ring according to any of claims 1 to 12, **characterised in that** the base body (15) has on the axial side bearing the sealing body (16) one or more axially aligned support surfaces (28) arranged radially outside and/or radially inside the sealing body (16).

## Revendications

1. Bague d'étanchéité qui comporte, sur chacun de ses deux côtés axiaux opposés l'un à l'autre, une portion d'étanchéité (13, 14) de forme annulaire et qui comprend un corps de base (15) en matière plastique, de forme annulaire, conférant à la bague d'étanchéité (12) une indéformabilité, ainsi qu'un corps d'étanchéité (16) de forme annulaire fixé dans une disposition concentrique sur le corps de base (15) et présentant les propriétés élastiques du caoutchouc, **caractérisée en ce que** le corps de base (15) est constitué d'une matière thermoplastique et forme, directement lui-même par l'un de ses côtés axiaux, la première portion d'étanchéité (13), et **en ce que** le corps d'étanchéité (16), formant la deuxième portion d'étanchéité (14), est constitué d'une matière plastique élastomère et est venu de moulage sur le côté axial opposé à la première portion d'étanchéité (13), pour former un élément moulé par injection à deux composants sur le corps de base (15).

2. Bague d'étanchéité selon la revendication 1, **caractérisée en ce que** le corps de base (15) présente, sur la première Portion d'étanchéité (13), au moins une saillie axiale (22) de forme annulaire, disposée concentriquement au corps de base (15).

3. Bague d'étanchéité selon la revendication 2, **caractérisée en ce que** la ou les saillies axiales (22) présentent une arête d'étanchéité (23) partant axialement du corps de base (15).

4. Bague d'étanchéité selon la revendication 2 ou 3, **caractérisée en ce que** la première portion d'étanchéité (13) dispose de plusieurs saillies axiales (22, 22', 22") disposées concentriquement l'une à l'autre.

5. Bague d'étanchéité selon l'une des revendications 1 à 4, **caractérisée en ce que** dans la zone de son pourtour intérieur sont prévues plusieurs saillies de maintien (33) réparties sur le pourtour, lesquelles sont réalisées d'un seul tenant avec le corps d'étanchéité (16) et s'étendent radialement vers l'intérieur par rapport au corps de base (15).

6. Bague d'étanchéité selon la revendication 5, **caractérisée par** trois saillies de maintien (33) disposées à distance régulière l'une de l'autre.

7. Bague d'étanchéité selon la revendication 5 ou 6, **caractérisée en ce que** les saillies de maintien (33) sont venues de moulage sur la surface périphérique intérieure (34), dirigée radialement vers l'intérieur, du corps de base (15), et sont reliées au corps d'étanchéité (16) par des entretoises de liaison (35).

8. Bague d'étanchéité selon l'une des revendications 1 à 7, **caractérisée en ce que** le corps d'étanchéité (16) est maintenu, par une portion de fixation (26) de forme annulaire, dans une rainure annulaire (25) pratiquée sur le côté axial associé du corps de base (15), et dépasse axialement du corps de base (15), par au moins un bourrelet d'étanchéité (24) de forme annulaire.

9. Bague d'étanchéité selon la revendication 8, **caractérisée en ce qu'**il est prévu radialement à l'extérieur et/ou à l'intérieur, dans la zone de transition entre le bourrelet d'étanchéité (24) et la portion de fixation (26) plus large que celui-ci, un renfoncement (27, 27') de type rainure.

10. Bague d'étanchéité selon la revendication 8 ou 9 en combinaison avec la revendication 7, **caractérisée en ce que** le corps de base (15) présente, sur le côté axial comportant le corps d'étanchéité (16), des évidements (36) s'étendant entre la rainure annulaire (25) et la surface périphérique intérieure (34), dans lesquels les entretoises de liaison (35) sont reçues au moins en partie.

11. Bague d'étanchéité selon l'une des revendications 1 à 10, **caractérisée en ce que** le corps d'étanchéité (16) et le corps de base (15) sont injectés l'un sur l'autre sans liant.

12. Bague d'étanchéité selon l'une des revendications 1 à 11, **caractérisée par** au moins une échancrure (32) de forme annulaire prévue radialement à l'extérieur et/ou radialement à l'intérieur du corps d'étanchéité (16), sur le corps de base (15), en particulier pour recevoir la matière refoulée du corps d'étanchéité.

13. Bague d'étanchéité selon l'une des revendications 1 à 12, **caractérisée en ce que** le corps de base (15) présente, sur le côté axial portant le corps d'étanchéité (16), au moins une surface d'appui (28) orientée axialement et disposée radialement à l'extérieur et/ou à l'intérieur du corps d'étanchéité (16).
